# FASCICULE DE BREVET EUROPEEN

(11) **EP 0 419 376 B1**
(45) Date de publication et mention de la délivrance du brevet: **02.03.1994**
(21) Numéro de dépôt: 90420402.1
(22) Date de dépôt: 12.09.1990
(51) Int. Cl.: B23Q 7/14, B23P 21/00, B65G 37/02

(54) **Machine de production incorporant un dispositif rapide d'amenage et de positionnement à double pas de pélerin, et système de production mettant en oeuvre ce type de machine**
Fertigungseinrichtung mit einer Vorrichtung zum schnellen Zuführen und Positionieren im doppelten Pilgerschritt und Fertigungssystem zum Verwenden dieser Einrichtung
Production machine including a rapid-action device for feeding and positioning with a double pilgrim process and production system employing this type of machine

(30) Priorité: 22.09.1989 FR 8912558
(43) Date de publication de la demande: 27.03.1991
(73) Titulaire: MERLIN GERIN, F-38240 Meylan (FR)
(72) Inventeur: Terracol, Claude, F-38050 Grenoble Cédex (FR); Bredel, Patrick, F-38050 Grenoble Cédex (FR); Guillet, Jean, F-38050 Grenoble Cédex (FR)
(74) Mandataire: Jouvray, Marie-Andrée

(56) Documents cités:
- EP-A- 0 286 546
- DE-A- 3 333 993
- FR-A- 2 192 960
- GB-A- 2 195 596
- PATENT ABSTRACTS OF JAPAN, vol. 13, no. 71 (M-799)[3419], 17 février 1989;& JP-A-63 272 435 (HONDA MOTOR CO.) 09-11-1988
- TOOLING & PRODUCTION, vol. 45, no.5, août 1979, pages 70-72; "Special transfer lines ADD speed to precisionapplication"
- TOOLING & PRODUCTION, vol. 43, no.12, mars 1978, pages 102-105; J.J. KONKAL: "Transaxle transfer line"
- PATENT ABSTRACTS OF JAPAN, vol. 12, no. 286 (M-727)[3133], 5 août 1988;& JP-A-63 62 624 (HONDA MOTOR CO.) 18-03-1988

## Description

L'invention est relative à une machine de production selon le préambule de la revendication 1 (voir GB-A-2 195 596).

La demande de brevet EP-A-286 546 fait état d'un dispositif d'amenage-positionnement à pas de pèlerin permettant de présenter des palettes successivement sur différents postes de travail. Le système est principalement orienté sur l'assemblage automatique, les palettes servant de support au produit en cours d'élaboration, et chaque poste de travail correspondant à une opération du processus à effectuer (insertion, soudage, sertissage, contrôle etc...). A cette fin, chaque poste est équipé d'un dispositif approprié que nous désignerons ci-après par le nom générique de "module de travail".

Une caractéristique essentielle du type de machine ainsi réalisée est un haut niveau de flexibilité, obtenu en équipant chaque module (module d'amenage-positionnement et modules de travail) d'une motorisation individuelle, la synchronisation étant effectuée par un pilotage électronique. Ce pilotage permet, en fonction des différentes situations rencontrées, de déclencher au niveau de chaque module des cycles de fonctionnement, lorsque ce fonctionnement est possible et nécessaire, et de laisser le module inactif dans le cas contraire.

Une autre caractéristique de la machine réside dans sa configuration linéaire, qui la rend particulièrement apte à s'intégrer dans une ligne de production comprenant d'autres machines en amont et aval, la liaison entre les machines pouvant facilement être réalisée par des tronçons de convoyeurs servant éventuellement de stocks-tampons.

La souplesse de fonctionnement décrite au paragraphe précédent peut être utilement mise à profit :
- au niveau du module d'amenage-positionnement pour subordonner son fonctionnement au fait que certaines conditions nécessaires soient correctement remplies:
   = alimentation amont (présence d'une palette en butée à l'entrée de la machine)
   = non blocage par l'aval (absence d'accumulation au delà d'un certain point critique sur le convoyeur aval)
   = aptitude des modules de travail sollicités à remplir leur fonction
- au niveau des modules de travail, pour adapter la machine aux différentes variantes du produit à réaliser, en rendant tel ou tel module actif ou inactif en fonction de la variante qui se présente (celle-ci étant identifiée automatiquement par lecture d'un codage à l'entrée de la machine).

Ainsi décrite par le EP-A-286 546, une telle machine est parfaitement adaptée pour être placée dans un système de configuration strictement linéaire, c'est-à-dire partant d'une palette vide sur laquelle s'élabore progressivement, par opérations successives, le produit à réaliser. En fin de processus, le produit terminé est retiré de la palette, celle-ci étant alors recyclée vers la machine de tête de ligne.

En théorie pure, un tel système pourrait être réalisé par une machine unique présentant le nombre voulu de postes de travail. Dans la pratique, ce nombre est généralement tel que l'on est conduit à prévoir plusieurs machines en série en les reliant par des éléments de convoyeurs, ainsi qu'il est décrit plus haut.

Un tel système linéaire peut être avantageusement utilisé toutes les fois que la gamme des opérations à effectuer s'y prête, ce qui n'est pas toujours le cas. On peut en effet, notamment dans le domaine de l'assemblage, rencontrer certaines contraintes que la configuration linéaire ne permet pas toujours de satisfaire :
- Produit incorporant des sous-ensembles nettement individualisés, chaque sous-ensemble devant faire l'objet d'un processus bien particulier avant d'être incorporé au produit principal. La ligne de production devient alors arborescente (à l'image de la gamme) c'est à dire qu'elle se compose d'une ligne principale conduisant au produit fini, et d'une ou plusieurs lignes affluentes, chacune de des lignes étant dédiées à un sous-ensemble donné.
- Présence d'opérations qui, pour des raisons techniques, ne peuvent être effectuées sur les palettes véhiculant le produit principal (par exemple, opérations de formage ou de soudage) devant se faire impérativement avant insertion dans le produit principal pour des raisons d'accessibilité ou de pollution).

Le document GB 2195 596 définit une machine de montage pour moteurs d'automobiles, dans laquelle les mouvements d'amenée du moteur au poste d'assemblage, et du filtre et capot, respectivement aux postes d'approvisionnement sont synchronisés avec ceux du robot de transfert. Les convoyeurs auxiliaires comportent des courroies et un élévateur déchargeur à l'extrémité. La piste principale est éloignée des pistes auxiliaires, et le robot de transfert comporte plusieurs têtes de manipulation, dont une par piste auxiliaire, l'ensemble étant monté à rotation sur un rail annulaire. L'encombrement et la complexité d'un tel robot augmente le coût de la machine.

L'objet de la présente invention a pour but de résoudre les problèmes signalés ci-dessus.

Selon l'invention une machine du genre cité initialement se caractérise en ce que :
- chaque dispositif d'aménagement et de positionnement comporte un mécanisme d'actionnement à pas de pèlerin pour effectuer un cycle rectangulaire comprenant une première course verticale de prise en charge de la pièce, une deuxième course horizontale d'amenée de la pièce, une troisième course verticale de positionnement de la pièce en un endroit prédéterminé, et une quatrième course horizontale de retour,
- les pièces ou sous-ensembles disposés sur des palettes se déplacent dans le même sens sur les deux pistes parallèles et adjacentes à l'intérieur d'une station de convergence dans laquelle s'effectue la fonction de transfert,
- des convoyeurs d'alimentation et d'évacuation encadrent la station de convergence à l'amont et à l'aval et coopèrent avec les deux mécanismes à pas de pèlerin,
- et le manipulateur est disposé transversalement le long des pistes de transport, ladite machine étant agencée pour que les mouvements des pas de pèlerin et du manipulateur soient synchronisés pendant son fonctionnement.

Quand un sous-ensemble est élaboré sur une ligne affluente, celle-ci peut être équipée de machines classiques, en fonction des opérations à traiter. Mais elle se termine obligatoirement par une machine particulière, qui est commune avec la ligne principale, et a pour fonction essentielle d'assurer le transfert du sous-ensemble terminé sur le produit principal en cours d'élaboration. Une telle machine sera désignée ci-après "station de convergence. Sur la ligne principale, elle occupe une position quelconque (généralement en cours de ligne, mais il n'est pas exclu qu'elle soit en tête ou en fin de ligne dans certains cas). Sur la ligne affluente, elle occupe obligatoirement la position de fin de ligne, c'est-à-dire que les palettes correspondantes en sortent vides et sont recyclées vers la machine de tête de la ligne affluente.

Selon un premier mode de l'invention, une station de convergence est caractérisée par la présence de deux dispositifs d'amenage-positionnement à pas de pélerin disposés parallèlement l'un à l'autre et fonctionnant en opposition (quand l'un prend vers l'amont, l'autre dépose vers l'aval, et inversement). Les deux dispositifs sont donc mécaniquement distincts, au niveau de la cinématique à cames, la motorisation pouvant, elle, être unique, si on y trouve un avantage de simplicité.

L'un des dispositifs étant incorporé dans la ligne principale, et l'autre dans la ligne affluente, nous les désignerons respectivement par "piste principale" et "piste affluente".

La machine doit bien entendu être complètée par un manipulateur de transfert disposé transversalement aux dispositifs d'amenage, et fonctionnant à la même cadence. Ce manipulateur, de type Pick and Place, prend le sous-ensemble sur une palette de la piste affluente, et va le déposer sur le produit principal, lui-même porté par une palette de la piste principale. La synchronisation de l'ensemble doit être telle que les opérations 'Pick" et "Place" interviennent bien au moment voulu des cycles des deux pas de pélerin. C'est d'ailleurs ce qui impose que ces cycles soient en opposition.

Selon un autre mode de réalisation de l'invention, les deux dispositifs à pas de pèlerin ne fonctionnent plus en opposition, mais en phase. Cette particularité introduit une simplification importante, dans la mesure où on peut se contenter d'un mécanisme unique pour l'ensemble. En contrepartie, on rencontre un problème au niveau du manipulateur de transfert. En effet, comme les deux pistes sont en phase, lorsque le manipulateur a effectué l'opération "Pick", il doit attendre un cycle complet du dispositif d'amenage avant d'effectuer l'opération 'Place" (au lieu d'un demi cycle dans le cas précédent). Il s'ensuit que ce manipulateur doit fonctionner à une cadence moitié de celle du dispositif d'amenage. Comme le débit de transfert des sous-ensembles doit être assuré, on se trouve en conséquence dans l'obligation de disposer 2 postes de transfert consécutifs fonctionnant en parallèle, soit en disposant 2 manipulateurs, soit, plus simplement, un seul manipulateur muni de 2 têtes de préhension.

Les machines que nous venons de décrire se limitent à la fonction transfert, qui est la fonction essentielle d'une station de convergence. Or, le transfert proprement dit n'occupant qu'un encombrement longitudinal réduit, il est évident qu'on peut, selon les besoins, complèter une telle machine pour d'autres opérations du process. Sur la piste principale, ces opérations peuvent être placées en amont ou en aval du transfert. Sur la piste affluente, elles sont obligatoirement en amont.

On peut ainsi faire apparaître un cas limite de station de convergence : celui où la ligne affluente se réduit à la piste affluente de la machine elle-même. Il n'y a alors pas de machine affluente en amont, et la recirculation des palettes vides se fait directement entre l'amont et l'aval de la piste affluente. Une telle machine sera dénommée simplement "machine double", et non station de convergence. Elle est indiquée lorsqu'on a à réaliser un sous-ensemble ne nécessitant que peu d'opérations, mais celles-ci devant obligatoirement être effectuées en dehors du produit principal.

D'autres avantages et caractéristiques ressortiront plus clairement de l'exposé qui va suivre de modes particuliers de réalisation de l'invention, donnés à titre d'exemples non limitatifs et représentés aux dessins annexés sur lesquels:
- la figure 1 est un schéma synoptique d'une ligne de fabrication à structure arborescente, comportant une ligne affluente, une station de convergence, et une machine double;
- la figure 2 est une vue en plan d'une station de convergence fonctionnant selon le principe des 2 pas de pélerin en opposition;
- la figure 3 est une vue en plan d'une station de convergence fonctionnant selon le principe des 2 pas de pélerin en phase;
- la figure 4 est un diagramme cinématique illustrant le fonctionnement de la machine décrite par la figure 3;
- la figure 5 est un ensemble de schémas montrant les positions successives des palettes à l'occasion d'un démarrage sur le même type de machine;
- la figure 6 est une vue en plan d'une machine double montrant un principe de recirculation des palettes;
- la figure 7 est une vue en élévation d'une machine double montrant un autre principe de recirculation des palettes;
- la figure 8 est une vue en élévation du mécanisme de commande.

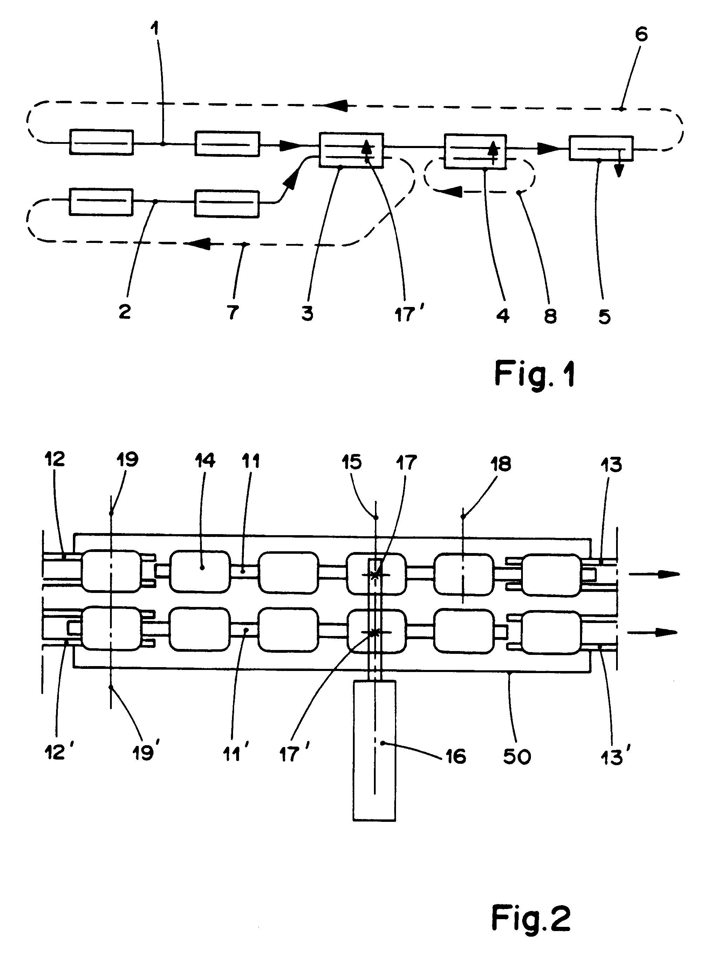

Sur la figure 1 est représenté un système de fabrication comportant une ligne principale 1 et un ligne affluente 2 comportant chacune un certain nombre de machines simples. La jonction de ces deux lignes se fait au niveau de la station de convergence 3, sur laquelle on voit apparaître les 2 pistes principale et affluente, ainsi que la flèche transversale représentant le transfert du sous-ensemble issu de la ligne affluente.

La machine 4, incorporée à la ligne principale, est une machine double, c'est-à-dire qu'elle comporte, en plus de sa piste principale, une piste affluente sur laquelle s'élabore un composant ou un sous-ensemble peu complexe, lequel est transféré sur la piste principale au poste repéré par la flèche transversale.

La machine 5 étant la fin de ligne, la flèche transversale représente l'enlèvement du produit fini.

Les circuits en pointillé 6, 7 et 8 représentent la recirculation des palettes vides respectivement de la ligne principale 1, de la ligne affluente 2, et entre l'aval et l'amont de la machine double 4.

La figure 2 représente une station de convergence 3, dont le bâti 50 est équipé de deux pas de pèlerin 11 et 11', respectivement de la piste principale et de la piste affluente adjacente. Pour la clarté du dessin, ils sont limités à leur élément mobile, animé du cycle rectangulaire, et coopérant avec les convoyeurs d'alimentation et d'évacuation 12, 13, 12', 13'. Les palettes 14 sont prises sur les convoyeurs 12 et 12', et déposées sur les convoyeurs 13 et 13', après être passées par un certain nombre de postes de travail. Parmi ceux-ci, le poste 15 est équipé d'un manipulateur de transfert 16 agencé pour prendre le sous-ensemble de la ligne affluente au point 17', et le déposer sur la ligne principale au point 17. Le poste suivant 18 peut être utilement équipé d'un dispositif de contrôle vérifiant que le sous-ensemble a bien été mis en place et correctement positionné.

Sur le plan du fonctionnement, les palettes 14 se déplacent dans le même sens sur les deux pistes, et on a vu que les deux pas de pèlerin fonctionnent en opposition, ce que la figure 2 met en évidence en représentant le mobile 11 en position aval, et le mobile 11' en position amont. A partir de là, un cycle complet se déroulera comme suit :
- Phase d'amenage sur la piste affluente et phase de retour du mobile 11 sur la piste principale. Pendant cette phase, les palettes 14 se trouvent disponibles sur cette piste pour opérations de travail. C'est donc à ce moment que le manipulateur 16 doit se présenter au point 17 pour effectuer la dépose d'un sous-ensemble.
- Phase de mouvements verticaux au cours de laquelle le mobile 11 passe de la position basse à la position haute, et le mobile 11' de la position haute à la position basse. C'est approximativement pendant cette phase que le manipulateur 16 effectue sa course de retour du point 17 vers le point 17'.
- Phase d'amenage sur la piste principale et phase de retour sur la piste affluente. Prise d'un sous-ensemble par le manipulateur au point 17'.
- Phase d'inversion des positions verticales et de transfert du manipulateur du point 17, et retour à la situation initiale.

Pendant le cycle ainsi décrit, on voit que les 3 dispositifs (les deux pas de pèlerin et le manipulateur) ont effectué chacun un cycle complet. Ils sont donc à synchroniser à la même cadence. L'ensemble fonctionne tant que l'alimentation est normalement assurée, c'est-à-dire tant qu'on détecte l'arrivée des palettes aux postes amont 19, 19', tant sur la piste principale que sur la piste affluente. Dès qu'on ne détecte plus de palettes sur une de ces pistes, l'ensemble s'immobilise dans une position d'attente permettant au pas de pélerin correspondant d'attendre qu'une palette arrive.

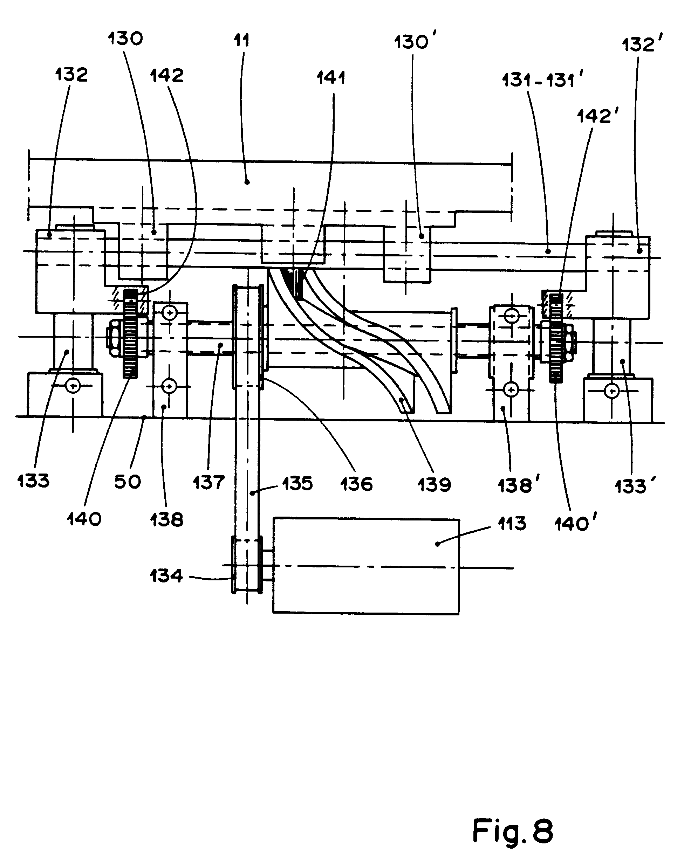

La figure 8 illustre le mécanisme de commande d'un dispositif pas de pèlerin à règle 11 effectuant un cycle rectangulaire. La règle 11 est solidaire de blocs de guidage 130, 130' coulissant sur des tiges horizontales parallèles 131, 131', lesquelles forment un ensemble rigide avec les blocs 132, 132', qui sont eux-mêmes des blocs de guidage coulissant sur les tiges verticales 133,133'. La règle 11 possède donc bien deux degrés de liberté dans les directions horizontale et verticale. L'entraînement est effectué à partir du moteur 113 (comportant éventuellement un réducteur incorporé) et passe par la poulie 134, la courroie 135 de type cranté, et la poulie 136 elle-même calée sur l'arbre à cames 137, porté par les paliers 138, 138'. L'arbre 137 porte la came hélicoïdale 139 qui génère le mouvement horizontal et les cames plates 140, 140', qui génèrent le mouvement vertical (les cames 140, 140' ont le même profile; elles sont dédoublées uniquement pour assurer correctement le support de l'ensemble mobile en vertical 131, 131', 132, 132'). La came horizontale 139 coopère avec la galet 141 solidaire de la règle 11. Notons que la hauteur de ce galet et sa plongée dans la gorge de la came 139 sont suffisantes pour tolérer le déplacement vertical sans qu'il y ait désolidarisation. Les cames verticales 140, 140' coopèrent avec les galets 142, 142' solidaires des blocs 132, 132', le rappel étant assuré par la pesanteur de l'ensemble mobile (que l'on peut renforcer par des ressorts si nécessaire). Concernant le mouvement horizontal, le rappel est fourni par la came elle-même, qui est à double effet. La règle 11 est commandée par un mécanisme identique entraîné par le même moteur 113 ou un moteur synchronisé, les mouvements étant décalés pour déplacer les règles 11, 11' en opposition.

En plus du manipulateur de transfert 16, la machine peut être équipée d'autres modules de travail, tant sur la piste principale que sur la piste affluente. En fonction des besoins de la production, l'activation de ces modules peut être systématique ou non. Il en est d'ailleurs de même du module de transfert, qui peut être rendu inactif, ainsi que l'ensemble de la ligne affluente, si certaines variantes du produit à fabriquer ne comportent pas le sous-ensemble élaboré sur cette ligne.

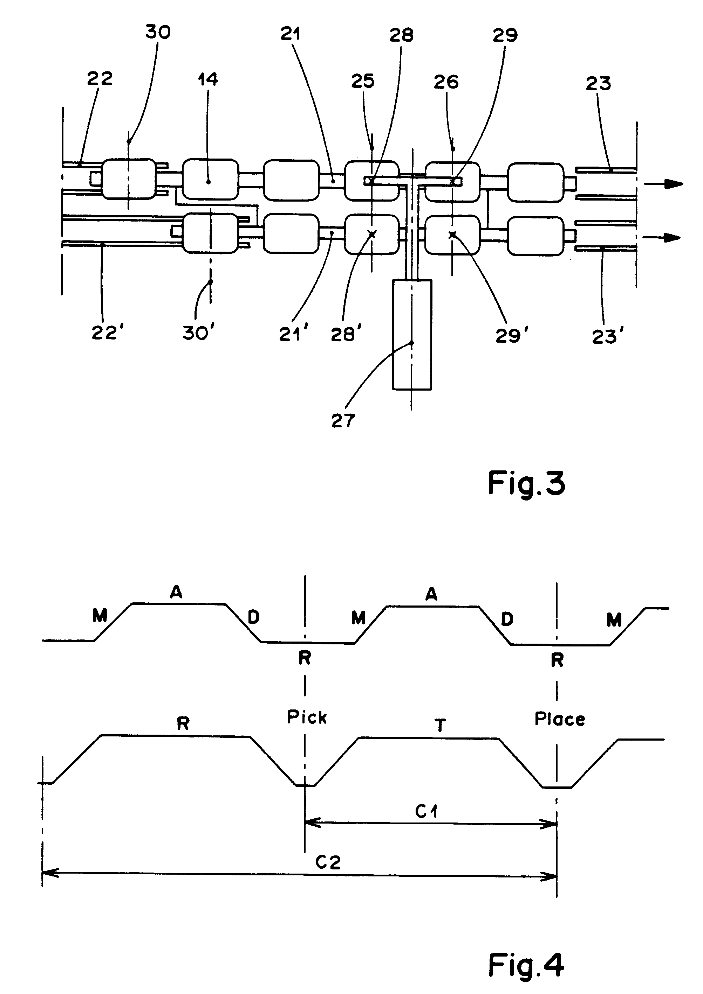

La figure 3 représente la seconde version de station de convergence, dans laquelle les deux éléments mobiles de pas de pélerin 21, 21' sont animés du même mouvement, et peuvent donc de ce fait être rendu mécaniquement solidaires et être entraînés par le même mécanisme selon la figure 8. Les phases d'amenage de palettes et de retour étant alors synchronisées, et le manipulateur 27 ne pouvant effectuer une opération sur une des pistes que pendant la phase de retour, celui-ci doit donc travailler en alternance en effectuant une opération "Pick" sur la piste affluente à l'occasion d'un cycle, et une opération "Place" sur la piste principale à l'occasion du cycle suivant. Sa cadence est donc moitié de celle du pas de pélerin, ce qui explique la nécessité de consacrer 2 postes de travail 25, 26 à la fonction transfert, et de faire fonctionner 2 préhenseurs en parallèle, pour prendre simultanément 2 sous-ensembles aux point 28', 29', et les déposer ensuite aux points 28, 29.

Concernant la zone amont de la machine, on peut remarquer que les postes 30, 30' de prise en charge des palettes sur les convoyeurs d'alimentation 22, 22' ont été décalés d'un pas. Si on ne le faisait pas, lors d'une reprise après interruption, les deux premières palettes se présenteraient simultanément aux points 28, 28', ce qui permettrait de prélever le sous-ensemble à transférer en 28', mais ne permettrait pas de le déposer en 28. En effet, la dépose se faisant au cycle suivant, la palette intéressée ne se trouverait plus en 28, mais en 29, et ne recevrait donc pas de sous-ensemble. Le décalage précité permet d'éviter cet inconvénient, en présentant la première palette de la piste principale en 28 un cycle plus tard que l'on présente la première palette de la piste affluente en 28'. La même précaution permet également de gérer correctement les changements de variante du produit fabriqué qui intéressent les deux pistes.

Dans une solution légèrement différente, le décalage peut être obtenu en laissant les deux pas de pèlerin identiques, et en utilisant une butée éclipsable placée sur le convoyeur d'alimentation 22, un cran en amont du poste de prise en charge des palettes par le pas de pélerin 21.

La figure 4 illustre le fonctionnement cinématique de la machine décrite par la figure 3. Le diagramme supérieur est relatif au pas de pèlerin, et positionne dans le temps les 4 phases de celui-ci : amenage (A), descente (D), retour (R) et montée (M). Le diagramme inférieur est relatif au manipulateur 27, qui présente les phases de déplacement horizontal : transfert (T) et retour (R) entre lesquelles interviennent les opérations actives "Pick" et "Place". Ces opérations devant intervenir pendant les phases R du pas de pèlerin, il est clair que le cycle du manipulateur (C2) doit être le double de celui du pas de pèlerin (C1).

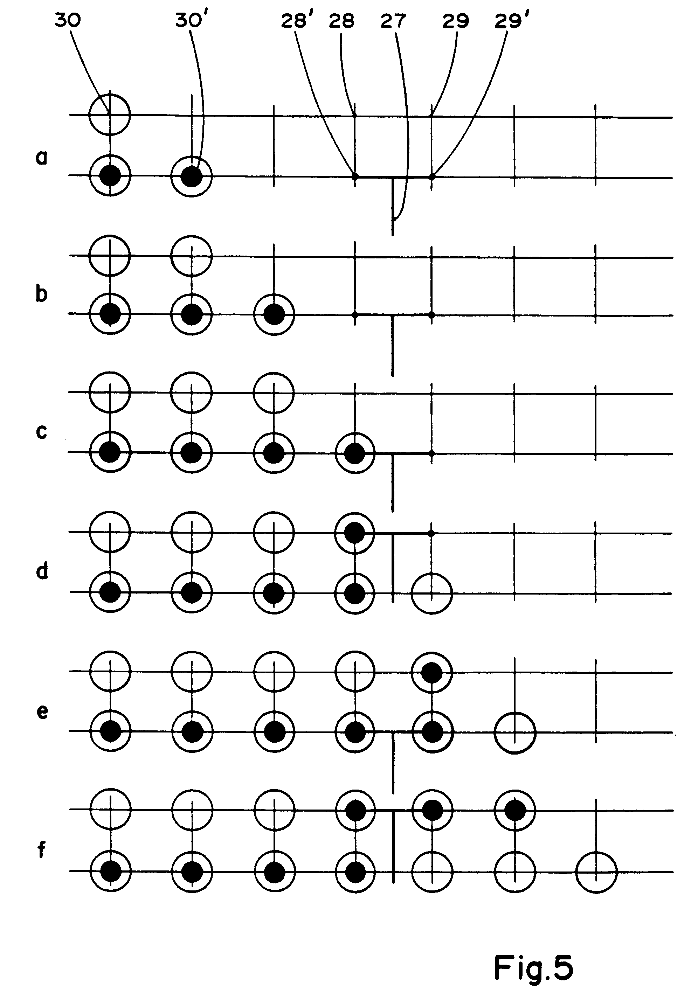

Sur la figure 5, toujours relative au même type de machine, on présente 6 situations successives intervenant quand la machine démarre à vide, et séparées chronologiquement par des intervalles correspondant à un cycle C1.
- Schéma a : la présence simultanée de palettes est détectée à l'entrée des pistes principale et affluente. Une palette est représentée par un disque clair ; le sous-ensemble à transferer est représenté par un disque noir plus petit. On retrouve sur ce schéma la configuration de la figure 3 : postes d'entrée 30, 30', postes de transfert 28, 29, 28'; 29' desservis par le manipulateur à 2 préhenseurs 27.
- Schéma b : progression d'un pas
- Schéma c : nouvelle progression d'un pas.
   Le manipulateur saisit un sous-ensemble en 28'.
- Schéma d : le manipulateur est passé sur la piste principale. Il dépose le sous-ensemble précédemment pris en charge au poste 28, sur lequel se trouve à ce moment la première palette de la piste principale.
- Schéma e : le manipulateur est revenu sur la piste affluente. Il y prend cette fois en charge 2 sous-ensembles aux postes 28', 29'.
- Schéma f : le manipulateur est de nouveau sur la piste principale où il dépose les 2 sous-ensembles en 28, 29, où se trouvent les 2ème et 3ème palette de la piste principale etc...

Ce processus fait clairement apparaître le système de transfert des palettes, ainsi que le rôle joué par le décalage à l'entrée.

On pourait bâtir un scénario similaire en supposant qu'il ne s'agit pas d'un démarrage, mais d'un changement de variante du produit fabriqué. Le problème est alors d'éviter la fabrication d'un produit "hybride" incorporant un sous-ensemble d'une variante A dans un produit de base d'une variante B. Si on imagine que les palettes représentées sur la figure 5 appartiennent à la variante B, et qu'elles étaient précédées par des palettes de la variante A, on voit que ce type de mélange ne se produira pas, pourvu qu'il y ait concordance entre le nombre de palettes par variante qui se présentent sur les pistes principale et affluente. Si cela n'est pas le cas, il y aura à un moment donné discordance entre les variantes présentes aux postes d'entrée 30, 30', situation qu'il faut impérativement détecter par une scrutation appropriée, et à laquelle il faut remédier, par élimination du surplus, celui-ci pouvant apparaître soit sur la piste principale, soit sur la piste affluente. Cette élimination peut être effectuée manuellement, ou, pour rester dans l'esprit de l'invention, automatiquement. Si le surplus apparaît sur la piste principale, il faut alors installer un dispositif d'évacuation mécanique des palettes concernées. Ce dispositif peut être placé à un endroit quelconque de la machine, le plus judicieux étant de le placer à la sortie, où il peut alors remplir également la fonction d'élimination des palettes rebutées pour raison de qualité, dans le cas où la machine comporte également un ou plusieurs postes de contrôle. Si le surplus apparaît sur la piste affluente, on peut également procéder par élimination des palettes concernées, mais aussi, plus simplement, par présentation d'une goulotte éclipsable aux points de dépose 28 ou 29, permettant de recueillir et d'évacuer les sous-ensembles apportés par le manipulateur 27, cette goulotte étant automatiquement présentée quand il y a surplus, et rétractée en cas de travail normal.

Ce type de problème n'intervient bien entendu que si le changement de variante intéresse simultanément la ligne principale et affluente.

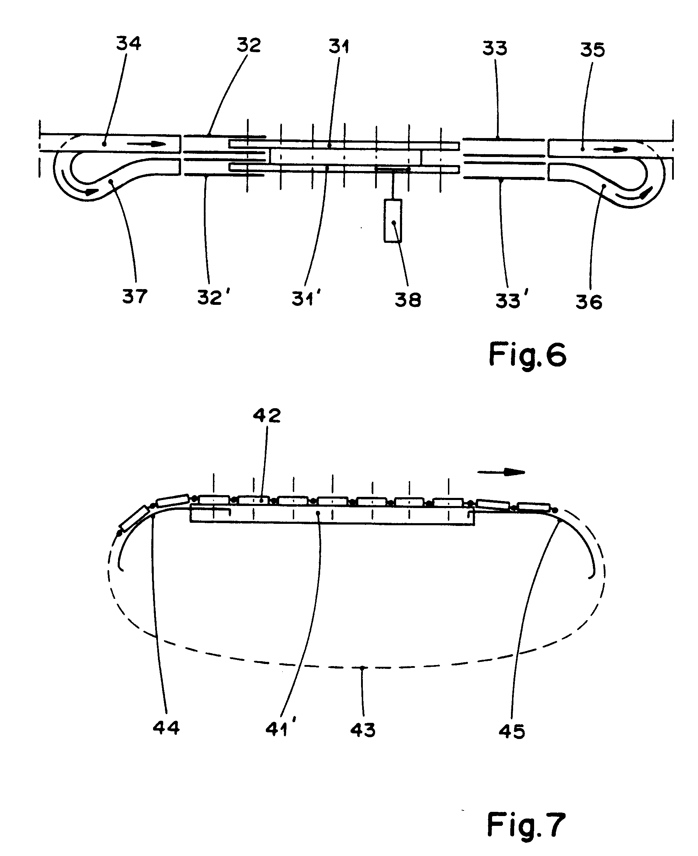

La figure 6 représente un exemple de réalisation d'une machine double, laquelle, on l'a vu, est un cas limite où la ligne affluente se limite à la piste affluente de la station de convergence elle-même, sans aucune autre machine en amont. Le problème spécifique à ce type de machine est d'organiser la recirculation des palettes vides entre l'amont et l'aval de la machine. Cette recirculation doit se faire de préférence sans empiéter sur l'espace dévolu aux modules de travail et à leur accès, ce qui interdit pratiquement la solution simple qui consisterait en une simple boucle horizontale.

On reconnaît sur la figure 6 les pas de pèlerin 31, 31' respectivement de la piste principale et de la piste affluente, ainsi que les convoyeurs amont et aval 32, 32', 33, 33'. Sur la ligne principale, ces convoyeurs sont relayés par les convoyeurs classiques 34 et 35 qui appartiennent à la transitique inter-machines. Sur la ligne affluente, la recirculation des palettes se fait en passant sous la piste principale, l'accès à ce niveau inférieur se faisant par exemple par une simple glissière 36, les palettes étant ensuite reprises par un convoyeur de type à écailles 37 qui les ramène vers l'amont de la machine, puis les remonte au niveau du plan de travail pour les présenter à l'amont du convoyeur 32'. Dans un tel système, la quantité de palettes à mettre en service doit être suffisante pour occuper tous les postes de travail de la piste affluente, plus une petite quantité supplémentaire calculée pour qu'il n'y ait jamais d'attente de palettes à l'entrée de la piste affluente. Comme ces palettes reviennent à vide, donc dans un état banalisé, il n'y a pas de problème de concordance à l'entrée de la machine, donc pas de nécessité de prévoir un décalage entre les 2 pistes.

Comme sur une station de convergence classique, on rencontre, en général vers l'aval, un manipulateur de transfert 38 qui assure le transfert de la pièce ou du sous-ensemble élaboré sur la piste affluente sur la piste principale. Sur la figure 6, il s'agit d'une machine à pas de pèlerin en phase, donc équipée d'un manipulateur à double préhenseur, mais on pourrait imaginer aussi bien qu'il s'agisse d'une machine à pas de pèlerin en opposition, auquel cas on aurait un manipulateur à préhenseur simple.

La figure 7 illustre une autre variante de recirculation des palettes présentée selon une vue en élévation de la piste affluente. Dans cette variante, les palettes 42 sont articulées entre elles de façon à constituer une chaîne sans fin 43. Les articulations de cette chaîne doivent avoir la précision voulue, mais aussi une certaine liberté pour permettre le jeu normal de prise et de dépose par le pas de pélerin 41'. A l'amont et à l'aval, les palettes sont guidées par des glissières profilées 44 et 45 qui assurent la transition entre la zone active et la zone de retour. Pour limiter les frottements, ces glissières peuvent être remplacées par des rampes à galets.

## Revendications

1. Machine de production comprenant un bâti (50), deux dispositifs d'amenage et de positionnement (11, 11', 21, 21', 31, 31') portés par le bâti pour former deux pistes parallèles (1, 2) de transport de pièces, et un manipulateur (16, 27, 38) de transfert permettant de prendre une pièce ou sous-ensemble issu de l'une des pistes constituant une piste affluente (2) pour le déposer sur l'autre piste, constituant une piste principale (1), les différents mouvements étant synchronisés,
caractérisée en ce que :
- chaque dispositif d'amenage et de positionnement comporte un mécanisme d'actionnement à pas de pèlerin pour effectuer un cycle rectangulaire comprenant une première course verticale de prise en charge de la pièce, une deuxième course horizontale d'amenée de la pièce, une troisième course verticale de positionnement de la pièce en un endroit prédéterminé, et une quatrième course horizontale de retour,
- les pièces ou sous-ensembles disposés sur des palettes (14) se déplaçent dans le même sens sur les deux (1, 2) pistes parallèles et adjacentes à l'intérieur d'une station de convergence (3) dans laquelle s'effectue la fonction de transfert,
- des convoyeurs d'alimentation et d'évacuation encadrent la station de convergence (3) à l'amont et à l'aval et coopèrent avec les deux mécanismes à pas de pèlerin,
- et le manipulateur (17, 27, 38) est disposé transversalement le long des pistes (1,2) de transport, ladite machine étant agencée pour que les mouvements des pas de pèlerin et du manipulateur soient synchronisés pendant son fonctionnement.

2. Machine selon la revendication 1, caractérisée en ce que les deux mécanismes d'actionnement à pas de pèlerin (11, 11') fonctionnent en opposition, l'un opérant pendant la première course de prise, et l'autre opérant pendant la troisième course de positionnement et inversement, et en ce que le manipulateur de transfert (16) comporte un simple préhenseur fonctionnant à la même cadence que les pas de pèlerin.

3. Machine selon la revendication 1, caractérisée en ce que les deux mécanismes d'actionnement à pas de pèlerin (21, 21') fonctionnent en phase en étant animés du même mouvement, et en ce que le manipulateur de transfert (27) est muni d'un double préhenseur et fonctionne à la cadence moitié de celle des pas de pèlerin.

4. Machine selon l'une des revendications 1 à 3, caractérisée en ce que des moyens de recyclage assurent la recirculation des palettes de l'aval vers l'amont de la station de convergence.

5. Machine selon la revendication 4, ayant un jeu de glissière (36) et de convoyeur (37), caractérisée en ce que le recyclage des palettes se fait en passant sous la piste principale (fig. 6).

6. Machine selon la revendication 4, caractérisée en ce que les palettes (42) sont organisées selon une chaîne sans fin (43) permettant leur prise en charge par le pas de pèlerin (41'), et assurant leur retour en passant sous celui-ci, dans le même plan vertical (fig. 7).

## Patentansprüche

1. Fertigungseinrichtung mit einem Untergestell (50), zwei von dem Gestell getragenen Zustell- und Positioniersystemen (11, 11', 21, 21', 31, 31') zur Bildung von zwei parallelen Werkstück-Transportbahnen (1, 2) und einer Transfer-Handhabungseinrichtung (16, 27, 38), mit deren Hilfe ein Werkstück oder eine Unterbaugruppe von einer der beiden, eine Zulieferbahn bildenden Transportbahn entnommen und anschließend auf der anderen, eine Hauptbahn (1) bildenden Transportbahn abgelegt werden kann, wobei die verschiedenen Bewegungen miteinander synchronisiert sind,
dadurch gekennzeichnet, daß:
- jedes Zustell- und Positioniersystem einen Pilgerschritt-Antriebsmechanismus zur Durchführung eines Rechteckzyklus' aufweist, der sich aus einer ersten, vertikalen Bewegung zur Aufnahme des Werkstücks, einer zweiten, horizontalen Bewegung zur Zustellung des Werkstücks, einer dritten, vertikalen Bewegung zur Positionierung des Werkstücks und einer vierten, horizontalen Rücklaufbewegung zusammensetzt,
- sich die auf den Paletten (14) plazierten Werkstücke und Unterbaugruppen in der gleichen Richtung auf den beiden parallel angeordneten Transportbahnen (1, 2) bewegen, die innerhalb einer Übergabestation (3) zusammenlaufen, in der der Werkstücktransfer erfolgt,
- zum An- und Abtransport dienende Förderanlagen vor bzw. hinter der Übergabestation (3) angeordnet sind und mit den beiden Pilgerschrittmechanismen zusammenwirken
- und die Handhabungseinrichtung (17, 27, 38) quer zu den Transportbahnen (1, 2) angeordnet ist, wobei die genannte Einrichtung so ausgelegt ist, daß die Bewegungen der Pilgerschrittmechanismen und der Handhabungseinrichtung während des Betriebs miteinander synchronisiert sind.

2. Einrichtung nach Anspruch 1, dadurch gekennzeichnet, daß die beiden Pilgerschrittmechanismen (11, 11') gegenläufig arbeiten, so daß sich einer der Mechanismen in der ersten Aufnahmephase befindet, wenn sich der andere in der dritten Positionierphase befindet und umgekehrt, und daß die Transfer-Handhabungseinrichtung (16) mit einem Einzelgreifer ausgestattet ist, der im gleichen Takt arbeitet wie die Pilgerschrittmechanismen.

3. Einrichtung nach Anspruch 1, dadurch gekennzeichnet, daß die beiden Pilgerschrittmechanismen (21, 21') im Gleichtakt arbeiten sowie die gleiche Bewegung beschreiben und daß die Transfer-Handhabungseinrichtung (27) mit einem Doppelgreifer ausgestattet ist und im Vergleich zu den Pilgerschrittmechanismen mit dem halben Takt arbeitet.

4. Einrichtung nach einem der Ansprüche 1 bis 3, dadurch gekennzeichnet, daß die Rückführmittel die Rückführung der Paletten vom Ausgang zum Eingang der Übergabestation gewährleisten.

5. Einrichtung nach Anspruch 4 mit einer Kombination aus Rutsche (36) und Förderer (37), dadurch gekennzeichnet, daß die Rückführung der Paletten unterhalb der Hauptbahn erfolgt (Fig. 6).

6. Einrichtung nach Anspruch 4, dadurch gekennzeichnet, daß die Paletten (42) zu einer Endloskette (43) miteinander verbunden sind, die eine Aufnahme der Paletten durch den Pilgerschrittmechanismus (41') erlaubt und ihre Rückführung in der gleichen senkrechten Ebene unterhalb dieses Mechanismus' gewährleistet (Fig. 7).

## Claims

1. A production machine comprising a frame (50), two lift and carry devices (11, 11', 21, 21', 31, 31') supported by the frame to form two parallel tracks (1, 2) for transporting parts, and a transfer handling unit (16, 27, 38) enabling a part or sub-assembly coming from one of the tracks constituting a branch track (2) to be picked up and placed on the other track constituting a main track (1), the different movements being synchronized,
· characterized in that :
· - each lift and carry device comprises a walking beam actuating mechanism to perform a rectangular cycle comprising a first vertical travel to pick the part up, a second horizontal travel to carry the part, a third vertical travel to place the part at a predetermined place, and a fourth horizontal return travel,
· - the parts or sub-assemblies arranged on palettes (14) move in the same direction on the two adjacent parallel tracks (1, 2) inside a convergence station (3) in which the transfer function takes place,
· - feed and removal conveyors are located upline and downline from the convergence station (3) and cooperate with the two walking beam mechanisms,
· - and the handling unit (17, 27, 38) is arranged transversely along transport tracks (1, 2), said machine being arranged so that the movements of the walking beam and handling unit are synchronized during its operation.

2. The machine according to claim 1, characterized in that the two walking beam actuating mechanisms (11, 11') operate in opposition, one operating during the first pick travel, and the other operating during the third place travel and vice-versa, and that the transfer handling unit (16) comprises a single grip operating at the same rate as the walking beams.

3. The machine according to claim 1, characterized in that the two walking beam actuating mechanisms (21, 21') operate in phase being animated with the same movement, and that the transfer handling unit (27) is equipped with a double grip and operates at half the rate of that of the walking beams.

4. The machine according to one of the claims 1 to 3, characterized in that recycling means perform recirculation of the palettes from downline to upline of the convergence station.

5. The machine according to claim 4, having a slide (36) and conveyor (37) set, characterized in that recycling of the palettes is achieved by passing under the main track (fig.6).

6. The machine according to claim 4, characterized in that the palettes (42) are organized in an endless chain (43) enabling them to be taken up by the walking beam (41'), and ensuring their return by passing under the latter, in the same vertical plane (fig.7).
